# EUROPÄISCHE PATENTSCHRIFT

(11) **EP 1 131 649 B1**
(45) Veröffentlichungstag und Bekanntmachung des Hinweises auf die Patenterteilung: **22.11.2006**
(21) Anmeldenummer: 99963233.4
(22) Anmeldetag: 14.11.1999
(51) Int. Cl.: G01S 5/02, G01S 1/02

(54) **VERFAHREN UND VORRICHTUNG ZUR AUFDECKUNG UND ÖRTLICHEN EINGRENZUNG UNERWÜNSCHTER FUNKAUSSENDUNGEN**
METHOD AND DEVICE FOR DISCOVERING AND LOCALIZING UNDESIRABLE RADIO EMISSIONS
PROCEDE ET DISPOSITIF POUR DECOUVRIR ET DELIMITER LOCALEMENT DES EMISSIONS RADIO PARASITES

(30) Priorität: 16.11.1998 DE 19852715
(43) Veröffentlichungstag der Anmeldung: 12.09.2001
(73) Patentinhaber: Mansel, Detlef, 45549 Sprockhövel (DE)
(72) Erfinder: Mansel, Detlef, 45549 Sprockhövel (DE)
(74) Vertreter: Schneider, Uwe
(86) Internationale Anmeldenummer: PCT/DE1999/003620
(87) Internationale Veröffentlichungsnummer: WO 2000/029866

(56) Entgegenhaltungen:
- EP-A- 0 631 453
- EP-A- 0 689 369
- WO-A-96/42020

## Beschreibung

Die Erfindung betrifft ein Verfahren und eine Vorrichtung zur Aufdeckung und örtlichen Eingrenzung unerwünschter Funkaussendungen, zum Beispiel unerlaubter Mobilfunktelefonie, gemäß Oberbegriff des Anspruches 1.

Funkaussendungen sind nicht in allen Lebensbereichen zulässig. Beispiele für unerlaubte Bereiche sind Justizvollzugsanstalten (aus Sicherheit gegen unerlaubte Absprachen usw.), aber auch Flugzeuge, Krankenhäuser (jeweils aus Gründen der elektromagnetischen Verträglichkeit EMV) oder andere Bereiche (Schutz vor Belästigung wie z. B. in Restaurants oder dgl.). In diesen Bereichen muß eine unerwünschte Funkaussendung zuverlässig erkannt und ausreichend genau örtlich zugeordnet werden, damit ein zügiges Abschalten des Gerätes und evtl. aus dem Verkehr bringen möglich ist. Dabei muß das Gerät keinesfalls als Funkgerät konzipiert sein. So stören viele andere Geräte, z. B. sog. Notebooks und CD-Spieler, auf Grund der dort verwendeten hohen Taktfrequenzen.

Mobilfunkgeräte (z. B. sog. "Handies") senden während des Telefonierens und bei organisatorischen Vorgängen (z. B. Einbuchen in ein Funknetz) Hochfrequenzenergie aus. Das jeweilige Funknetz (z.B. GSM, DECT, Tetra) besitzt dabei charakteristische Merkmale im Frequenz- und Zeitbereich, durch die die Funkaussendung zugeordnet werden kann. Andere Geräte (siehe oben) senden als unerwünschten Nebeneffekt Hochfrequenzenergie mit charakteristischen Merkmalen aus.

Eine erste Gruppe von bekannten Geräten zur Erkennung unerwünschter Funkaussendungen reagiert auf Funkaussendungen im interessierenden Frequenzbereich durch akustischen/ optischen/ elektrischen Alarm. Höherwertige, speziell für Mobilfunkgeräte konzipierte Geräte analysieren die Funkaussendungen auf weitere Charakteristika (z.B. im Zeitbereich), um Fehlalarme zu minimieren (z.B. Mobifinder der Fa. MAZ, veröffentlicht in VfS (Verband für Sicherheitstechnik) Fachinformation 2/98, Seiten 8-11).

Diese Geräte weisen den Nachteil auf, völlig richtungsunabhängig den umgebenden Raum nach Funkfeldern abzusuchen. Die Größe des abgesuchten Raumes hängt dabei ab von der Empfängerempfindlichkeit, der ausgesendeten Energie (die z. B. in modernen Funksystemen stark variieren kann, da sie adaptiv angepaßt wird) und von den Ausbreitungsbedingungen, die sehr komplex und wenig vorhersagbar sind. Damit ist ein "Alarm" örtlich so unspezifisch, daß ein Aufspüren des Hochfrequenz abstrahlenden Gerätes nach Alarmauslösung sehr schwierig ist. Oder aber es müssen sehr viele Geräte mit sehr kleinem Empfangsbereich eingesetzt werden, was funktechnisch schwer sicherzustellen und wirtschaftlich und ökonomisch fragwürdig ist.

Eine zweite Gruppe von Geräten, wiederum speziell für Mobilfunkgeräte, stört den Organisationskanal des jeweiligen Netzes (z.B. Firma Netline, Gerät C-Guard Cellular Firewall), so daß keine Einbuchung mehr erfolgen kann. Als weitere Idee existiert die Simulation einer Basisstation zum Aufspüren eventueller Mobilfunkgeräte durch Abfrage in einem begrenzten Gebiet.

Diese Geräte sind speziell für Mobilfunkgeräte konzipiert und zerstören bzw. beeinflußen die Möglichkeit zu telefonieren, in dem sie in die vorhandenen Netze eingreift. Da viele zu schützende Gebäude/ Gebiete in dicht bebauten Gegenden liegen, wird eine solche Lösung von den Netzbetreiber nicht akzeptiert. Schließlich soll außerhalb der zu schützenden Gebäude o. ä. ungestört telefoniert werden können. Eine genaue funktechnische Abgrenzung des Gebietes ist aber auf Grund der Eigenschaften der Funkausbreitung praktisch nicht möglich.

Ein weitere Gruppe von Geräten sind Funkpeiler (z. B. Rhode und Schwarz, digitaler Suchpeiler DDF0xS). Sie ermöglichen in einem ungestörten Funkfeld ohne Mehrwegeempfang eine Ermittlung der Richtung, aus der eine Funkaussendung (gewollte oder als Nebeneffekt) kommt.

Die Funkpeilung ist eine altbekannte Methode zum Lokalisieren von Funksendern. Sie funktioniert jedoch nur bei ungestörter Ausbreitung (Freifeld) einwandfrei. Weiterhin ist nur über aufwendige Zusatzverfahren neben der Richtungserfassung auch eine Entfernungserfassung (und damit ortsgenaue Erfassung) möglich. Für den geschilderten Anwendungsfall kann aber nicht von einer ungestörten Funkausbreitung ausgegangen werden. Vielmehr beruhen moderne Funksysteme (insbesondere in höheren Frequenzbereichen, z. B. GSM, DECT, Tetra) auf der Ausnutzung von Reflexion, Beugung usw.. Im Allgemeinen befinden sich die Hochfrequenz aussendenden Geräte in dicht bebauten Gebieten, in Gebäuden oder Flugzeugen usw. mit der Folge von Mehrwegeempfang. Es ist daher möglich, daß ein Hochfrequenz aussendendes Gerät tatsächlich in einer völlig anderen Richtung liegt, als die Peilung ergibt (veröffentlicht z. B. in Proceedings of the 8^{th} IEEE Symposium on Personal, Indoor and Mobile Radio Communications (PIMRC 97), page 95 - 99). Eine Peilung alleine bringt daher nicht das gewünschte Ergebnis.

Schließlich gibt es Geräte, die mittels Laufzeiten den Ort eines Hochfrequenz aussendenden Gerätes bestimmen (Fa. Cell-Loc. Inc./ Gerät Cellocate). Diese sind aber relativ ungenau (Genauigkeit auf 125 m in 67% der Fälle werden angegeben).

Die Ortsbestimmung mittels Laufzeiten allein ist zur Zeit noch zu ungenau und sowieso problematisch bei Mehrwegeempfang.

Somit steht zur Zeit keine Lösung zur Verfügung, die eine schnelle und ortsspezifische Erfassung einer unerwünschten Funkaussendung ohne großen meßtechnischen und personellen Aufwand ermöglicht.

In der WO 96 42020 A wird ein Verfahren beschrieben, mit dem aufgrund einer Anordnung von Antennen mit einer nachgeschalteten Auswerteeinheit ein aufgefangenes Signal eines Mobiltelefons oder dgl. hinsichtlich des Standortes des Mobiltelefones lokalisiert werden kann. Dies soll beispielsweise zur Rettung von Personen aus gefahrvollen Situationen oder dgl. dienen. Die Signale eines Mobiltelefons werden hierzu über eine Anzahl von auf dem Lokalisierungsgebiet positionierten und in ihrer Position genau bekannten Antennen aufgefangen, wobei beispielsweise über Laufzeitmessungen der aufgefangenen Signale an einzelnen Antennen und eine entsprechende Auswertung in einem neuronalen Netzwerk eine möglichst genaue Lokalisierung des Mobiltelefons erfolgt. Vorab wird mit Hilfe eines Meßfahrzeuges oder eines bewegten Mobiltelefons eine Lernphase vorgeschaltet, in der ständig Messungen von abgestrahlten Signalen des Mobiltelefones oder des Meßfahrzeuges vorgenommen werden, wobei die jeweilige Position des Mobiltelefones oder des Meßfahrzeuges genau bekannt ist. Hierdurch wird erreicht, daß man sogenannte Referenzsignale für typische Positionen von Mobiltelefonen vorab ermittelt, mit denen dann die im Betriebszustand aufgefangenen Signale von Mobiltelefonen unbekannter Position verglichen werden können. Dieser Vergleich erfolgt dann mit Hilfe eines neuronalen Netzwerkes, das eine Beseitigung von Empfangsfehlern und eine Synchronisierung von jeweils aufgefangenen Signalen verschiedener Antennen vornimmt.

Aufgabe der Erfindung ist es daher, eine schnelle und ortsspezifische Erfassung unerwünschten Funkaussendungen zu ermöglichen.

Die Lösung der erfindungsgemäßen Aufgabe ergibt sich hinsichtlich des Verfahrens aus den kennzeichnenden Merkmalen des Anspruches 1 in Zusammenwirken mit den Merkmalen des Oberbegriffes sowie hinsichtlich der Vorrichtung aus den Merkmalen des Anspruches 24. Weitere vorteilhafte Ausgestaltungen der Erfindung ergeben sich aus den Unteransprüchen.

Die Erfindung geht aus von einem Verfahren zur Aufdeckung und örtlichen Eingrenzung unerwünschter Funkaussendungen, z. B. unerlaubter Mobilfunktelefonie, bei dem mit mindestens einem Funkempfänger mit einer hinsichtlich ihrer Empfangseigenschaften beeinflußbaren Empfangseinrichtung ein Umgebungsbereich des Funkempfängers auf Vorhandensein von Funkaussendungen untersucht wird. Ein derartiges Verfahren wird dadurch weitergebildet, daß als Ausgangspunkt mindestens einmal eine Lernphase durchgeführt wird, in der anhand wechselnder räumlicher Zuordnung eine Referenzsendeeinrichtung für Funkaussendungen und dem Funkempfänger Abbilder abgestrahlter und bekannter örtlicher Referenzfunkaussendungen aufgenommen werden. Die in dieser Lernphase aufgenommenen Abbilder lassen eine Zuordnung des Standortes von Referenzfunkaussendungen aussendender Referenzsendeeinrichtungen zu, die beim späteren Ablauf des Verfahrens einen Vergleich zwischen nicht von der Referenzsendeeinrichtung ausgestrahlter Funkaussendungen mit denjenigen der Referenzsendeeinrichtung ermöglicht. Hierzu wird dann mindestens eine Meßphase ausgeführt, in der von dem Funkempfänger der Umgebungsbereich auf Funkaussendungen von unerwünschten Sendeeinrichtungen abgesucht und bei Vorliegen unerwünschter Funkaussendungen ein Abbild der unerwünschten Funkaussendungen aufgenommen wird. Dieses Absuchen und Aufnehmen des Abbildes von unerwünschten Funkaussendungen dient zum einen dazu, überhaupt das Vorliegen unerwünschter Funkaussendungen festzustellen und zum anderen über das Abbild der unerwünschten Funkaussendung in einem nachgelagerten Schritt in einer Auswertungsphase die in der Lernphase aufgenommen Abbilder und das Abbild der aufgenommenen Funkaussendungen miteinander zu vergleichen und daraus eine Information über die räumliche Position der Sendeeinrichtung der unerwünschten Funkaussendung im Umgebungsbereich zu ermitteln. Durch den Vergleich der Abbilder von unerwünschter Funkaussendung und der Referenzfunkaussendungen läßt sich anhand verschiedener Kriterien schlußfolgern, welches der Abbilder der Referenzfunkaussendungen der unerwünschten Funkaussendung am nächsten kommt und damit eine Aussage darüber treffen, wo sich die Sendeeinrichtung der unerwünschten Funkaussendung wahrscheinlich befinden könnte.

Hierbei seien in dieser Anmeldung als Abbilder der Referenzfunkaussendungen bzw. der unerwünschten Funkaussendung alle räumlich und/oder zeitlich aufgelösten physikalischen Kenngrößen oder Signale zu verstehen, die irgendeine Aussage über die Funkaussendungen zulassen. Hierbei können derartige Abbilder beispielsweise aus die Funkaussendung charakterisierenden Größen gebildet werden, die beispielsweise von einem Funkernfänger aufgenommen werden können, wie etwa die Größen Leistung, Frequenz bzw. Modulation, oder selbstverständlich auch jede weitere Kenngröße aus der Hochfrequenztechnik. So kann beispielsweise die Signalamplitude der Funkaussendungen über dem Azimut und evtl. über der Elevation abgebildet werden. Der Begriff Abbilder von Funkaussendungen weist allerdings nicht nur diese unmittelbar naheliegenden Begriffsinhalte auf, sondern es wird, wie zu verschiedenen vorteilhaften Weiterbildungen noch näher ausgeführt, ausdrücklich darauf hingewiesen, daß zur Unterstützung der örtlichen Zuordnung weitere Merkmale der Signale, z. B. zeitliche Merkmale der Signale wie Signallaufzeiten etc. ebenfalls im Rahmen des Begriffes Abbilder von Funkaussendungen zur Auswertung herangezogen werden können.

Das neuartige Verfahren gliedert sich somit in eine Lernphase, zwei Meßphasen und die Auswertung. In der ersten Meßphase wird der gesamte Empfangsbereich (schnell) durch entsprechendes Schwenken der Richtantenne nach unerwünschten Funkaussendungen durchkämmt. Da im interessierenden Gebiet keine Funkaussendung (der überprüften Art) erlaubt ist, ist die Trefferhäufigkeit gering. Wurde eine Funkaussendung gefunden, so wird in aller Regel nur ein Gerät beteiligt sein. Dessen Funkaussendung kann in vorteilhafter Ausgestaltung in einer zweiten Meßphase mit der Auflösung der Richtantenne gerastert werden. Damit entsteht ein eindimensionales oder zweidimensionales Bild der unerwünschten Funkaussendung. Die Merkmale dieses Abbildes geben Aufschluß über den Aufenthaltsort des Gerätes. Dazu wurde in einer vorher durchgeführten Lernphase das Abbild eines jeden Raumes/ interessierenden Bereiches (d. h. das ein-/zweidimensionale Bild der Funkaussendung für ein Gerät der überprüften Art in diesem Bereich) aufgenommen. Da sich die Anordnung der Räume/ interessierenden Bereiche im allgemeinen nicht ändert, kann vorteilhaft mit Methoden der Bilderkennung/ Mustererkennung eine Zuordnung gefunden werden. Diese wird einen bestimmten Zuverlässigkeitsgrad haben.

Es kann dabei ein Funkempfänger verwendet werden, der über eine Richtantenne verfügt, wobei die Richtwirkung über die gesamte Kugeloberfläche der Umgebung des Funkempfängers oder einen Teil davon steuerbar ist. Die räumliche Auflösung des Funkempfängers ist ebenfalls steuerbar. Als Verfahren kommt hierbei vorteilhaft das Schwenken der Empfangskeulen oder das Schwenken der Empfangsminima oder ein anderes bekanntes Verfahren aus der Peiltechnik zum Einsatz. Ebenfalls ist es denkbar, daß die Veränderung der Richtwirkung der Antenne mechanisch oder elektronisch oder mittels eines anderen bekannten Verfahrens erfolgen kann.

Für die Durchführung des Vergleichs der Abbilder der Referenzfunkaussendungen aus der Lernphase und des Abbildes der unerwünschten Funkaussendung werden in weiterer Ausgestaltung die Meßsignale der zweiten Meßphase bei Erkennen einer unerwünschten Funkaussendung an eine Auswertungseinrichtung übermittelt, in der die Meßsignale zu einem ein- oder zweidimensionalen Abbild der Funkaussendung ausgewertet werden. In dieser Auswertungseinrichtung wird in weiterer Ausgestaltung das Abbild der unerwünschten Funkaussendung dann mit den in der Lernphase aufgenommenen Abbildern der Referenzfunkaussendungen auf Übereinstimmungen verglichen, wobei in vorteilhafter Ausgestaltung der Vergleich mittels Methoden der Mustererkennung und/oder der Bilderkennung durchgeführt wird. Derartige Methoden sind dem Fachmann grundsätzlich bekannt und sollen daher hier nicht weiter erläutert werden. Es soll noch darauf aufmerksam gemacht werden, daß diese Methoden ebenfalls Methoden der Fuzzytechnik berücksichtigen können.

Ziel des Vergleiches ist es hierbei in weiterer Ausgestaltung, daß das in der Lernphase aufgenommene Abbild, das dem Abbild der unerwünschten Funkaussendung am nächsten kommt, sowie der aus der Lernphase bekannte Ort der zugehörigen Referenzfunkaussendung als Information über die räumliche Position der Sendeeinrichtung der unerwünschten Funkaussendung im Umgebungsbereich genutzt werden kann. Hierzu wird also das dem Abbild der unerwünschten Funkaussendung am nächsten kommende Abbild der Referenzfunkausendungen ausgewählt und die zugehörige Information über den Standort der Referenzsendeeinrichtung bei der Aufnahme der Referenzfunkaussendung als wahrscheinlicher Standort auch der Sendeeinrichtung der unerwünschten Funkaussendung angenommen. Eine derartige Auswertung kann in weiterer Ausgestaltung auch weitere Merkmale der Abbilder wie beispielsweise zeitliche Merkmale, Signallaufzeiten, Zeitversatz bei der Kanalumschaltung etc. verwenden. So kann z. B. bei Mobilfunkgeräten über den Zeitversatz zwischen Organisationskanal der beteiligten Basisstation und der Aussendung des Mobilfunkgerätes die Entfernung in etwa abgeschätzt werden. Dadurch fügt sich eine weitere Dimension in das Mustererkennungsverfahren ein. Durch weitere zusätzliche Größen kann die Mustererkennung in ein n-dimensionales Auswertungsverfahren überführt werden.

Wird eine unerwünschte Funkaussendung festgestellt und kann der Ort der unerwünschten Funkaussendung anhand der Auswertungsmethodik ermittelt werden, so wird ein Alarm ausgelöst und Aufsichtspersonal oder dgl. kann gezielt in den ermittelten räumlichen Bereichen nach dem Vorhandensein und dem Inhaber des Funksenders fahnden und den Betrieb unterbinden. Hierbei kann in weiterer Ausgestaltung beim Feststellen von Funkaussendungen in Bereichen, die zwar überwacht werden, in denen eine Funkaussendung aber grundsätzlich erlaubt ist (beispielsweise außerhalb eines zu überwachenden Bereiches), ein derartiger Alarm gleich von vornherein unterdrückt werden, so daß eine Alarmierung des Aufsichtspersonals nur bei wahrscheinlich innerhalb des Überwachungsbereiches in für die Funkaussendungen unzulässigen Bereichen angeordnete Sender ein Alarm gegeben wird.

Im unwahrscheinlichen Fall mehrfacher gleichzeitiger Aussendungen kann durch Sonderbetrachtungen bei der Auswertung ebenfalls ein (wenn auch nicht so gutes) Ergebnis erzielt werden. Zu den interessierenden Bereichen gehören auch die aus funktechnischen Gründen nicht zu vermeidenden Überlappungsbereiche außerhalb des zu schützenden Gebietes, in dem eine Funkaussendung (der überprüften Art) erlaubt ist. Wird das Gerät diesen Bereichen örtlich zugeordnet, wird kein (Fehl)alarm gegeben.

Zur Unterstützung der örtliche Zuordnung lassen sich weitere Merkmale des Signals (z. B. zeitliche) nutzen. So ist z. B. bei Mobilfunkgeräten über den Zeitversatz zwischen Organisationskanal der beteiligten Basisstation und der Aussendung des Mobilfunkgerätes die Entfernung in etwa schätzbar. Dadurch fügt sich eine weitere Dimension in das Mustererkennungsverfahren ein. Es ist denkbar, die Mustererkennung durch weitere Größen in ein n-dimensionales Verfahren zu ertüchtigen.

Bei der Mustererkennung können Fuzzytechniken zum Einsatz kommen, da die Meßaufgabe per se "unscharf" ist.

Der (Meß)empfänger kann auch auf einer bekannten örtlich Bahn bewegt werden. Dabei werden die vom jeweiligen Empfangsort bekannten Muster verwendet.

Die Ergebnisse können durch mehrere Empfangspfade (mehrere Empfänger oder Diversity-Empfang) und eine gemeinsame Auswertung verbessert werden.

Durch einen entsprechend empfindlichen Meßempfänger (dies wird durch die Richtwirkung der Antenne unterstützt) können für den Spezialfall Mobilfunk auch Mobilfunkgeräte geortet werden, die sich lediglich in Empfangsbereitschaft (sog. "Stand by") befinden. Dabei kann die andere Signal-/Frequenzstruktur berücksichtigt werden. Mobilfunkgeräte im "Stand by" werden bzgl. ihrer Empfangsbereitschaft häufig getaktet, um die Akkubetriebszeit zu verlängern. Das durch das Hoch-/Herunterfahren der Empfänger hervorgerufene Signal kann ebenfalls verwendet werden.

Durch einen entsprechend empfindlichen Meßempfänger (dies wird durch die Richtwirkung der Antenne unterstützt) können für den Spezialfall unerwünschte Funkaussendungen von an sich dafür nicht konzipierten Geräten (z. B. sog. Notebooks, CD-Spieler usw.) auch deren schwache Aussendungen aufgedeckt und örtlich zugeordnet werden.

Durch das beschriebene Verfahren ist es erstmals möglich, unerwünschte Funkaussendungen in einem Überwachungsbereich relativ genau zu günstigen Konditionen zu lokalisieren. Das ist trotz der in den geschilderten Anwendungen herrschenden Mehrwegeausbreitung möglich. Ein solches Aufspüren setzte bisher ein personalintensives Messen mit Spezialmessgeräten und Schlussfolgern durch in Funkausbreitung geschulten Fachleuten voraus. Durch die Lernphase tritt die Notwendigkeit für Fachpersonal - wenn überhaupt - nur während der Lernphase ein. Danach kann das Gerät von angelerntem Personal aus der jeweiligen zu schützenden Einrichtung heraus selbst bedient werden. Damit ist eine Überwachung rund um die Uhr zu sehr günstigen Konditionen möglich.

Durch die inzwischen sehr leistungsfähige Digitaltechnik kann der Algorithmus der Mustererkennung auf sehr preisgünstigen Standardrechner ablaufen. Elektronisch verstellbare Antennen werden durch ihren bevorstehenden Einsatz in Mobilfunknetzen zum Massenprodukt und damit ebenfalls preiswerter. Das gleiche gilt für HF-Empfänger. Deshalb kann neben dem Einsparen von Personalkosten auch von akzeptablen Gerätepreisen ausgegangen werden.

Ausführungsbeispiele der Anwendbarkeit des neuen Verfahrens sind in den Zeichnungen dargestellt und werden im folgenden näher beschrieben.

Besonders bevorzugte Anwendungsbereiche des erfindungsgemäßen Verfahrens und der Vorrichtung zeigt die Zeichnung.

Es zeigen:
- Figur 1 -: Überwachung eines Gebäudes von außen (Justizvollzugsanstalt)
- Figur 2 -: Überwachung eines Flugzeuges (Kabine)
- Figur 3 -: Überwachung eines Gebäudes von innen (Krankenhaus)

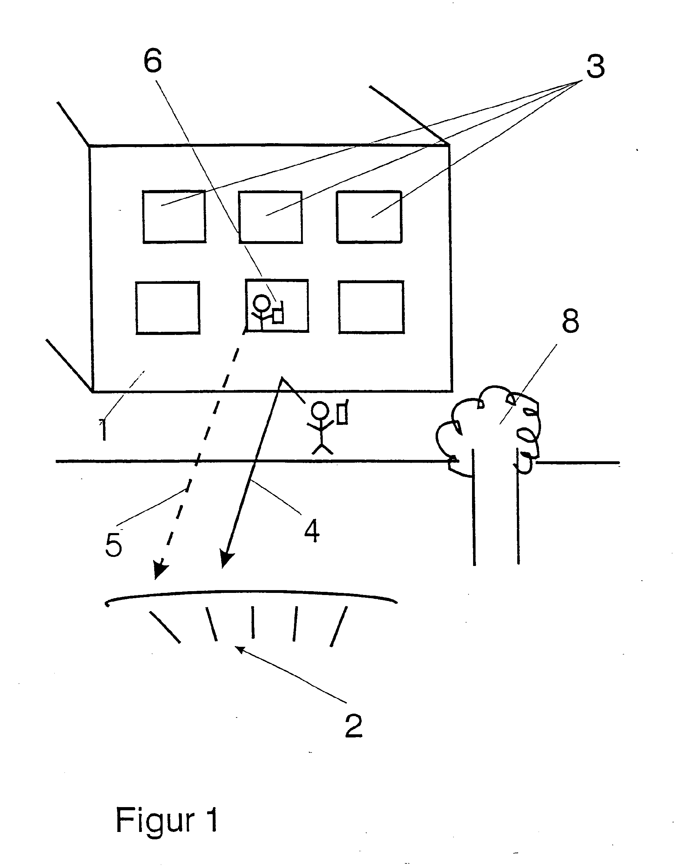

In der Beispielanwendung gemäß Figur 1 wird die Gebäudefront 1 einer Justizvollzugsanstalt (JVA) mit einem einzelnen Meßempfänger 2 überwacht. Der Empfänger speichert in einer Lernphase für jede Zelle 3 das/die Muster, das/die sich beim Telefonieren aus dieser Zelle 3 ergeben. Durch Mustererkennung kann dann bei einem unerlaubten Mobiltelefonieren z. B. in Zelle 6 das Muster wieder erkannt und mit einer gewissen Wahrscheinlichkeit der Zelle 6 zugeordnet werden. Dabei wird üblicherweise ein Mehrwegeempfang (angedeutet durch die beiden Pfeile 4 bzw. 5) vorliegen.

Eine erlaubte Mobiltelefonie 7 außerhalb des Gebäudes 1 kann durch Reflexion an der Gebäudefront 1 der JVA einen Funkempfang entsprechend Signallauf 5 aus der Richtung der JVA ergeben. Durch Hindernisse 8 (z. B. belaubte Bäume) kann die direkte Verbindung zwischen Mobilfunkgerät der erlaubten Telefonie 7 und Empfänger 2 (Line of Sight) blockiert sein. Ein einfaches Peilverfahren würde hier falsche Ergebnisse liefern. Das zweidimensionale Muster der reflektierten Funkaussendung 4 unterscheidet sich jedoch von den Mustern der Funkaussendungen 5 aus Zellen 3. Somit kann die erlaubte Mobiltelefonie 7 als solche erkannt werden und es erfolgt keine Alarmierung.

Da sich die Umgebung jahreszeitlich ändern kann (z. B. durch Belaubung von Bäumen), würde bei dieser Anordnung eine jahreszeitlich aufgeschlüsselte Muster-Lernphase angewendet. Oder es kann in geeigneten Zeitabständen eine neue Lernphase eingeschoben werden.

Nach Erkennen einer unerlaubten Funkaussendung kann vom Personal der JVA durch das örtliche Eingrenzen zielgerichtet in einer Zelle 3/ einzelnen Zellen 3 nach dem Sendegerät gesucht werden.

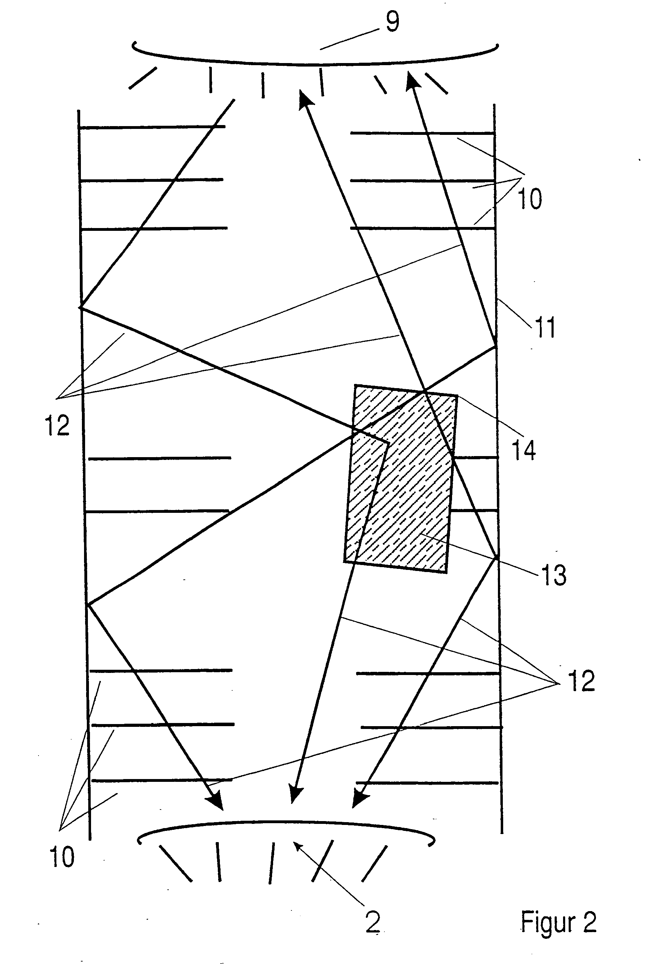

In der Beispielanwendung gemäß Figur 2 wird ein Flugzeug mit zwei Meßempfängern 2, 9 überwacht. Die Empfänger 2, 9 speichern in einer Lernphase für jeden Sitzplatz 13 bzw. jede Sitzreihe 10 das/die Muster, das/die sich bei Funkaussendungen von dort ergeben. Dabei werden die Muster im allgemeinen frequenzabhängig gespeichert werden müssen. Das ist notwendig, da im Flugzeug die unerwünschten Funkaussendungen 12 von Geräten (Mobilfunkgeräte im Stand by, Notebooks usw.) in einem weiteren Frequenzbereich liegen. Durch Mustererkennung kann dann bei einer unerlaubten Funkaussendung 12 das Muster wieder erkannt und mit einer gewissen Wahrscheinlichkeit einer bestimmten Sitzreihe 10/ einem bestimmten Sitz 13 zugeordnet werden. Im Beispiel wird zur Erhöhung der Empfindlichkeit und Ortsauflösung Gebrauch von zwei Empfängern 2, 9 gemacht. Dabei wird üblicherweise ein Mehrwegeempfang (angedeutet durch die Pfeile 12) vorliegen.

Da sich die Umgebung je nach Besetzung bei jedem Flug ein wenig ändern wird, muß die Mustererkennung entsprechend flexibel sein, z. B. über die Verwendung von Fuzzytechniken.

Nach Erkennen einer unerlaubten Funkaussendung 12 kann vom Kabinenpersonal durch das örtliche Eingrenzen (schraffierter Bereich 14) zielgerichtet nach dem Gerät gesucht/ gefragt werden.

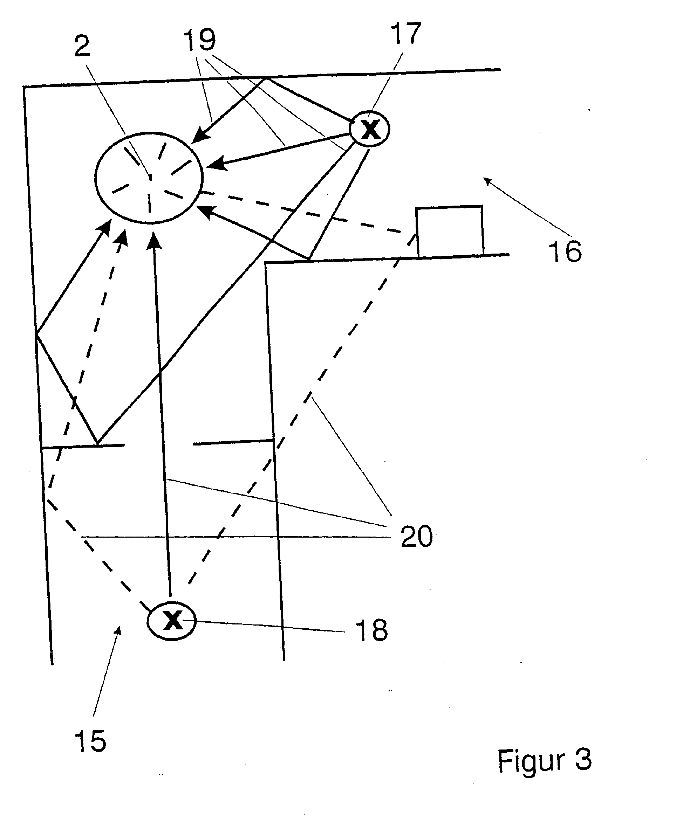

In der Beispielanwendung gemäß Figur 3 wird innerhalb eines Gebäudes (hier z. B. Krankenhaus) mit einem einzelnen Meßempfänger 2 ein zu schützender Bereich 16 überwacht. Der Empfänger 2 speichert in einer Lernphase für genügend Stellen im zu schützenden Bereich 16 (und evtl. auch zum Vergleich genügend Stellen aus dem erlaubten Bereich 15) das/ die Muster, die sich bei Funkaussendungen 19, 20 von dort ergeben. Dabei werden die Muster im allgemeinen frequenzabhängig gespeichert werden müssen. Das ist notwendig, da z. B. im Krankenhaus die unerwünschten Funkaussendungen 19 von Geräten (Mobilfunkgeräte im Stand by, Notebooks usw.) in einem weiteren Frequenzbereich liegen. Durch Mustererkennung kann dann bei einer unerlaubten Funkaussendung 19, 20 das Muster wieder erkannt und mit einer gewissen Wahrscheinlichkeit einer Stelle im zu schützenden Bereich 16 oder erlaubten Bereich 15 zugeordnet werden. Dabei wird üblicherweise ein Mehrwegeempfang (angedeutet durch die Pfeile 19, 20) vorliegen. Die Richtung ist auch hier kein ausreichendes Indiz für die Herkunft der Funkaussendung 17, 20, vielmehr muß das Muster herangezogen werden.

Da sich die Umgebung je nach Publikumsverkehr, Gegenständen in den Fluren usw. ein wenig ändern wird, muß die Mustererkennung entsprechend flexibel sein, z. B. über die Verwendung von Fuzzytechniken.

Nach Erkennen einer unerlaubten Funkaussendung 19 kann von den zuständigen Angestellten (z. B. Stationsschwestern) durch das örtliche Eingrenzen zielgerichtet nach dem Gerät gesucht/ gefragt werden.

### Sachnummernliste

| | |
|---|---|
| 1 - | Gebäudefront |
| 2 - | Empfänger |
| 3 - | Zelle |
| 4 - | Signallauf |
| 5 - | Signallauf |
| 6 - | unerlaubte Telefonie in Zelle |
| 7 - | erlaubte Telefonie außerhalb der Zelle |
| 8 - | Hindernis |
| 9 - | Empfänger |
| 10 - | Sitzreihen |
| 11 - | Flugzeugrumpf |
| 12 - | Signallauf |
| 13 - | Sitzplatz |
| 14 - | ermittelte Position/Bereich |
| 15 - | Bereich mit erlaubter Funkaussendung |
| 16 - | Bereich mit verbotener Funkaussendung |
| 17 - | Sender |
| 18 - | Sender |
| 19 - | Signallauf |
| 20 - | Signallauf |

## Patentansprüche

1. Verfahren zur Aufdeckung und örtlichen Eingrenzung unerwünschter Funkaussendungen (5, 12, 19), zum Beispiel unerlaubter Mobilfunktelefonie, bei dem mit mindestens einem Funkempfänger (2) mit einer hinsichtlich ihrer Empfangseigenschaften beeinflußbaren Empfangseinrichtung ein Umgebungsbereich des Funkempfängers (2) auf Vorhandensein von Funkaussendungen (5, 12, 19) untersucht wird, wobei mindestens eine Lernphase durchgeführt wird, in der anhand wechselnder räumlicher Zuordnung zwischen einer ReferenzSendeeinrichtung für Funkaussendungen (5, 12, 19) und dem Funkempfänger (2) Abbilder abgestrahlter und örtlich bekannter Referenz-Funkaussendungen aufgenommen werden,
**dadurch gekennzeichnet, daß**
mindestens eine erste Meßphase ausgeführt wird, in der von dem Funkempfänger (2) der Umgebungsbereich schnell und mit geringerer Genauigkeit auf das Vorhandensein von unerwünschten Funkaussendungen (5, 12, 19) abgesucht und bei Erkennen unerwünschter Funkaussendungen (5, 12, 19) in einer zweiten Meßphase ein Abbild der unerwünschten Funkaussendungen (5, 12, 19) ermittelt wird, für das die erkannte unerwünschte Funkaussendung (5, 12, 19) genauer vermessen wird, und sich
bei Vorliegen unerwünschter Funkaussendungen (5, 12, 19) eine Auswertungsphase anschließt, in der die in der Lernphase aufgenommenen Abbilder und das Abbild der in der zweiten Meßphase aufgenommenen Funkaussendungen (5, 12, 19) miteinander verglichen und daraus eine Information über die räumliche Position der Sendeeinrichtung (6, 13, 17) der unerwünschten Funkaussendungen (5, 12, 19) im Umgebungsbereich ermittelt wird, wobei
in der zweiten Meßphase die erkannte unerwünschte Funkaussendung (5, 12, 19) mit höherer zeitlicher und/oder räumlicher Auflösung des Funkempfängers (2) und/oder durch eine Veränderung der Richtwirkung des Funkempfängers (2) vermessen wird.

2. Verfahren nach Anspruch 1, **dadurch gekennzeichnet, daß** der Umgebungsbereich von dem Funkempfänger (2) ganz oder teilweise auf unerwünschte Funkaussendungen (5, 12, 19) abgesucht wird.

3. Verfahren nach einem der vorstehenden Ansprüche, **dadurch gekennzeichnet, daß** die Meßsignale der zweiten Meßphase bei Erkennen einer unerwünschten Funkaussendung (5, 12, 19) an eine Auswertungseinrichtung übermittelt werden, in denen die Meßsignale zu einem ein- oder zweidimensionalen Abbild der Funkaussendung (5, 12, 19) ausgewertet werden.

4. Verfahren nach Anspruch 3, **dadurch gekennzeichnet, daß** das Abbild der unerwünschten Funkaussendung (5, 12, 19) mit den in der Lernphase aufgenommenen Abbildern auf Übereinstimmungen verglichen wird.

5. Verfahren nach Anspruch 4, **dadurch gekennzeichnet, daß** der Vergleich des in der Lernphase aufgenommenen Abbildes und des Abbildes der unerwünschten Funkaussendung (5, 12, 19) mittels Methoden der Mustererkennung und/oder Bilderkennung durchgeführt wird.

6. Verfahren nach einem der Ansprüche 3 bis 5, **dadurch gekennzeichnet, daß** als Methoden der Mustererkennung und/oder Bilderkennung Fuzzytechniken zum Einsatz kommen.

7. Verfahren nach einem der Ansprüche 3 bis 6, **dadurch gekennzeichnet, daß** das in der Lernphase aufgenommene Abbild, das dem Abbild der unerwünschten Funkaussendung (5, 12, 19) am nächsten kommt, sowie der aus der Lernphase bekannte Ort der zugehörigen Referenz-Funkaussendung als Information über die räumliche Position der Sendeeinrichtung (6, 13, 17) der unerwünschten Funkaussendung (5, 12, 19) im Umgebungsbereich genutzt wird.

8. Verfahren nach Anspruch 7, **dadurch gekennzeichnet, daß** bei Bestimmung des Standortes der Sendeeinrichtung (6, 13, 17) einer unerwünschten Funkaussendung (5, 12, 19) in einem Teil des Umgebungsbereiches, in dem Funkaussendungen unerwünscht sind, die Auswerteeinheit das Bedienpersonal automatisch alarmiert.

9. Verfahren nach Anspruch 7, **dadurch gekennzeichnet, daß** bei Bestimmung des Standortes der Sendeeinrichtung (6, 13, 17) einer unerwünschten Funkaussendung (5, 12, 19) in einem Teil des Umgebungsbereiches, in dem eine Funkaussendung erlaubt ist, eine Alarmierung des Bedienpersonals unterdrückt wird.

10. Verfahren nach einem der Ansprüche 3 bis 9, **dadurch gekennzeichnet, daß** das in der Lernphase aufgenommene, nächstkommende Abbild und das Abbild der unerwünschten Funkaussendung (5, 12, 19) anhand unterschiedlicher Merkmale auf den Grad der Übereinstimmung untersucht wird.

11. Verfahren nach einem der Ansprüche 3 bis 9, **dadurch gekennzeichnet, daß** zusätzliche Informationen aus der unerwünschten Funkaussendung (5, 12, 19), vorzugsweise Signallaufzeiten, Zeitversatz bei der Kanalumschaltung oder dergleichen, als weitere Informationen bei der Auswertung der Signale des Funkempfängers (2) in der Auswerteeinheit benutzt werden.

12. Verfahren nach einem der vorstehenden Ansprüche, **dadurch gekennzeichnet, daß** die Signale von mehr als einem Funkempfänger (2) in der Auswerteeinheit ausgewertet und zu einem gemeinsamen Abbild der Funkaussendung (5, 12, 19) verarbeitet werden.

13. Verfahren nach einem der vorstehenden Ansprüche, **dadurch gekennzeichnet, daß** bei verbreiteten Mobilfunkgeräten, sogenannter. Handies, für die Auswertung der Abbilder auch die Funkaussendungen (5, 12, 19) derartiger Mobilfunkgeräte sogenannten. Stand-by-Modus genutzt werden, um den Standort des Mobilfunkgerätes zu bestimmen.

14. Verfahren nach Anspruch 13, **dadurch gekennzeichnet, daß** zur Ortsbestimmung derartiger Mobilfunkgeräte im sogenannten. Stand-by-Modus die Funkaussendungen (5, 12, 19) beim getakteten Ein- und Ausschalten der Empfänger der Mobilfunkgeräte genutzt werden.

15. Verfahren nach einem der vorstehenden Ansprüche, **dadurch gekennzeichnet, daß** das Verfahren auch zur Ortsbestimmung unspezifischer Funkaussendungen (5, 12, 19) von allgemeinen elektrotechnischen Geräten, vorzugsweise sogenannten. Notebooks, CD-Spieler oder dergleichen, dient, die Störfelder hochfrequenter Art abgeben.

16. Verfahren nach einem der vorstehenden Ansprüche, **dadurch gekennzeichnet, daß** bei Erkennen gleichzeitiger mehrfacher Funkaussendung (5, 12, 19) verschiedener unerwünschter Sendeeinrichtungen (6, 13, 17) eine Sonderbehandlung der Meßsignale des Funkempfängers (2) vorgenommen wird, bei der die Signale getrennt ausgewertet werden.

17. Verfahren nach einem der vorstehenden Ansprüche, **dadurch gekennzeichnet, daß** der mindestens eine Funkempfänger (2) und/oder die Referenz-Sendeeinrichtung während der Lernphase auf einer hinsichtlich seiner bzw. ihrer Position bekannten Bahn bewegt werden und der Funkempfänger (2) dabei an bekannten Punkten dieser Bahn Referenz-Funkausstrahlungen aufzeichnet.

18. Verfahren nach einem der vorstehenden Ansprüche, **dadurch gekennzeichnet, daß** die Lernphase einmalig oder in größeren Zeitabständen durchgeführt wird und die dabei entstehenden Abbilder typischer Funkaussendungen (5, 12, 19) gespeichert werden.

19. Verfahren nach Anspruch 18, **dadurch gekennzeichnet, daß** die Lernphase immer dann durchgeführt wird, wenn sich Gegebenheiten in dem Umgebungsbereich des Funkempfängers (2) signifikant, vorzugsweise auch jahreszeitlich geändert haben.

20. Verfahren nach einem der vorstehenden Ansprüche, bei dem mindestens ein Funkempfänger (2) mit einer hinsichtlich ihrer Empfangseigenschaften beeinflußbaren Empfangseinrichtung benutzt wird,
**dadurch gekennzeichnet, daß**
die Empfangseinrichtung eine Richtantenne verwendet.

21. Verfahren nach Anspruch 20, **dadurch gekennzeichnet, daß** der Funkempfänger (2) in seiner Richtwirkung und/oder seiner Auflösung beeinflusst wird.

22. Verfahren nach einem der Ansprüche 20 oder 21, **dadurch gekennzeichnet, daß** die Richtwirkung der Empfangseinrichtung über zumindest einen Teil der gesamten die Empfangseinrichtung umgebende Kugeloberfläche gesteuert wird.

23. Verfahren nach einem der Ansprüche 20 bis 22, **dadurch gekennzeichnet, daß** die Richtwirkung der Empfangseinrichtung mechanisch oder elektronisch verändert wird.

24. Verfahren nach einem der Ansprüche 20 bis 23, **dadurch gekennzeichnet, daß** die Richtwirkung der Empfangseinrichtung durch ein Schwenken der Empfangskeulen oder der Empfangsminima oder durch ein Verfahren der Peiltechnik verändert wird.

25. Verfahren nach einem der Ansprüche 20 bis 24, **dadurch gekennzeichnet, daß** der Funkempfänger (2) signaltechnisch mit einer Auswertungseinrichtung verbunden wird, an die er die Signale der empfangenen unerwünschten Funkaussendungen (5, 12, 19) weiterleitet.

26. Verfahren nach Anspruch 25, **dadurch gekennzeichnet, daß** bei Verwendung mehrerer Funkempfänger (2) alle Signale der empfangenen unerwünschten Funkaussendungen (5, 12, 19) an eine gemeinsame Auswertungseinrichtung weitergeleitet werden.

27. Verfahren nach einem der Ansprüche 25 oder 26, **dadurch gekennzeichnet, daß** die Auswerteeinheit einen Standard-Computer oder dergleichen verwendet.

## Claims

1. Method and device for discovering and localizing undesirable radio emissions (5, 12, 19) e.g. of illegal mobile radio telephony, with which the surrounding area of at least one radio receiver (2) with a receiving unit, the receiving characteristics of which can be manipulated, is checked for the presence of radio emissions (5, 12, 19), said method being comprised of at least one learning phase, in the course of which images of transmitted and already localized radio emissions are recorded by way of an alternating spatial allocation between a reference transmitting unit for radio emissions (5, 12, 19) and the radio receiver (2),
**characterized in that**
at least a first measuring phase is realized, in the course of which the surrounding area of the radio receiver (2) is checked quickly and with lower precision for the presence of undesirable radio emissions (5, 12, 19), and then, in case such undesirable radio emissions (5, 12, 19) are discovered, a second measuring phase is carried out in order to determine an image of the undesirable radio emissions (5, 12, 19), the discovered undesirable radio emissions (5, 12, 19) being measured more precisely for said image, which
is followed, in case of the presence of undesirable radio emissions (5, 12, 19), by an evaluation phase, in the course of which the images recorded during the learning phase and the image of the radio emissions (5, 12, 19) recorded during the second measuring phase are compared with each other and thus the location of the unit transmitting (6, 13, 17) the undesirable radio emissions (5, 12, 19) can be determined in the surrounding area,
the discovered undesirable radio emissions (5, 12, 19) being measured with a higher time and/or spatial resolution of the radio receiver (2) and/or by means of a change in the directivity of the radio receiver (2) in the framework of the second measuring phase.

2. Method according to claim 1, **characterized in that** the surrounding area of the radio receiver (2) is partly or entirely scanned for undesirable radio emissions (5, 12, 19).

3. Method according to one of the preceding claims, **characterized in that** the measuring signals of the second measuring phase are transferred to an evaluation unit, if undesirable radio emissions (5, 12, 19) are discovered, in which said measuring signals are analyzed in order to create a one- or two-dimensional image of the radio emission (5, 12, 19).

4. Method according to claim 3, **characterized in that** the image of the undesirable radio emissions (5, 12, 19) is compared with the images recorded during the learning phase in order to find common elements.

5. Method according to claim 4, **characterized in that** the comparison of the image recorded during the learning phase and the image of the undesirable radio emission (5, 12, 19) is carried out by means of pattern and/or image recognition methods.

6. Method according to one of the claims 3 to 5, **characterized in that** fuzzy techniques are used as pattern and/or image recognition methods.

7. Method according to one of the claims 3 to 6, **characterized in that** the image recorded during the learning phase that comes closest to the image of the undesirable radio emission (5, 12, 19) and the location of the applicable reference radio emission determined during the learning phase are used as information on the location of the unit transmitting (6, 13, 17) the undesirable radio emissions (5, 12, 19) in the surrounding area.

8. Method according to claim 7, **characterized in that** the evaluation unit automatically alerts the operating staff, if the unit transmitting (6, 13, 17) the undesirable radio emission (5, 12, 19) is localized in a part of the surrounding area in which radio emissions are undesired.

9. Method according to claim 7, **characterized in that** the alerting of the operating staff is suppressed, if the unit transmitting (6, 13, 17) the undesirable radio emission (5, 12, 19) is localized in a part of the surrounding area in which radio emissions are allowed.

10. Method according to claims 3 to 9, **characterized in that** the image recorded during the learning phase that comes closest to the image of the radio emission and the image of the undesirable radio emission (5, 12, 19) are checked for the degree of correspondence as regards different features.

11. Method according to one of the claims 3 to 9, **characterized in that** the additional information deduced from the undesirable radio emission (5, 12, 19), preferably signal propagation delays, time offset during the channel switching or the like, are used as further information that are taken into account for the evaluation of the signals of the radio receiver (2) in the evaluation unit.

12. Method according to one of the preceding claims, **characterized in that** the signals of more than one radio receiver (2) are analyzed by the evaluation unit and summarized in a joint image of the radio emission (5, 12, 19).

13. Method according to one of the preceding claims, **characterized in that** for widely spread mobile radio devices, so-called mobile phones, the radio emissions (5, 12, 19) transmitted by such mobile radio devices in the so-called stand-by mode are also used for the evaluation of the images in order to determine the position of such mobile radio device.

14. Method according to claim 13, **characterized in that** for the localizing of such mobile radio devices in the so-called stand-by mode, the radio emissions (5, 12, 19) transmitted during the clocked switching-on and switching-off of the mobile radio devices are used.

15. Method according to one of the preceding claims, **characterized in that** the method is also useful for localizing non-specific radio emissions (5, 12, 19) of general electrotechnical devices, preferably so-called notebooks, CD players or the like that emit high-frequency interference.

16. Method according to one of the preceding claims, **characterized in that** in case of the discovering of several simultaneous radio emissions (5, 12, 19) of different undesirable transmitting units (6, 13, 17), a special treatment of the measuring signals of the radio receiver (2) is carried out, in the course of which the signals are separately analyzed.

17. Method according to one of the preceding claims, **characterized in that**, during the learning phase, the at least one radio receiver (2) and/or reference transmitting unit is dislocated from the position on its known track and the radio receiver (2) records radio emissions on known points of this track.

18. Method according to one of the preceding claims, **characterized in that** the learning phase is carried out once or in greater time intervals, respectively, and the images of typical radio emissions (5, 12, 19) resulting from such learning phase(s) are saved.

19. Method according to claim 18, **characterized in that** the learning phase is always carried out, after the surrounding conditions of the radio receiver (2) have significantly changed, preferably also during the seasons.

20. Method according to one of the preceding claims, during the course of which at least one radio receiver (2) with a receiving unit, the receiving characteristics of which can be manipulated, is used,
**characterized in that**
the receiving unit uses a directional antenna.

21. Method according to claim 20, **characterized in that** the radio receiver (2) is manipulated concerning its directivity and/or its resolution.

22. Method according to one of the claims 20 or 21, **characterized in that** the directivity of the receiving unit is at least partly controlled via the sphere surrounding the receiving unit.

23. Method according to one of the claims 20 or 22, **characterized in that** the directivity of the receiving unit is mechanically or electrically modified.

24. Method according to one of the claims 20 to 23, **characterized in that** the directivity of the receiving unit is modified by pivoting the reception lobes or the reception minima or by means of method of the direction-finding technology.

25. Method according to one of the claims 20 to 24, **characterized in that** the radio receiver (2) is connected via signals with the evaluation unit, to which it forwards the signals of the undesirable radio emissions (5, 12, 19) received.

26. Method according to claim 25, **characterized in that,** if more than one radio receiver (2) is used, all signals of the undesirable radio emissions (5, 12, 19) received are forwarded to a common evaluation unit.

27. Method according to one of the claims 25 or 26, **characterized in that** the evaluation unit uses a standard computer or the like.

## Revendications

1. Procédé pour découvrir et délimiter localement des émissions radio parasites (5, 12, 19), résultant par exemple de la téléphonie mobile non-autorisée, procédé dans le cadre duquel la présence d'émissions radio (5, 12, 19) est vérifiée dans une zone autour d'un récepteur radio (2) à l'aide d'une installation de réception dont les caractéristiques de réception sont susceptibles d'être influencées, ledit procédé comprend au moins une phase d'apprentissage pendant laquelle, à l'aide de l'affectation spatiale changeante entre une installation d'émission de référence pour les émissions radio (5, 12, 19) et le récepteur radio, (2) des images d'émissions radio de référence émises et localement connues sont prises,
**caractérisé en ce**
**qu'**au moins une première phase de mesure est effectuée, phase dans le cadre de laquelle la présence d'émissions radio parasites (5, 12, 19) est vérifiée rapidement et à une précision moins élevée dans l'environnement à l'aide du récepteur radio et que, en cas de détection d'émissions radio parasites (5, 12, 19), une image des émissions radio parasites (5, 12, 19) est prise et mesurée plus exactement au cours d'une deuxième phase de mesure et que,
en cas de présence d'émissions radio (5, 12, 19), une phase d'évaluation suit, phase pendant laquelle les images prises pendant la phase d'apprentissage et l'image des émissions radio (5, 12, 19) prise pendant la deuxième phase de mesure, sont comparés et que des informations sur la position spatiale de l'installation d'émission (6, 13, 17) des émissions radio parasites (5, 12, 19) dans l'environnement en sont extraites,
pendant la deuxième phase de mesure, les émissions radio parasites détectées (5, 12, 19) sont mesurées à l'aide d'une résolution temporelle et/ou spatiale plus élevée(s) du récepteur radio (2) et/ou par la modification de l'effet directif du récepteur radio (2).

2. Procédé selon la revendication 1, **caractérisé en ce que** l'environnement du récepteur radio (2) est balayé en tout ou en partie pour détecter des émissions radio parasites (5, 12, 19).

3. Procédé selon l'une des revendications susmentionnées, **caractérisé en ce que**, en cas de détection d'une émission radio parasite (5, 12, 19), les signaux de mesure de la deuxième phase de mesure sont transmis à une unité d'analyse où les signaux de mesure sont évalués pour obtenir une image de l'émission radio (5, 12, 19) à une ou deux dimensions.

4. Procédé selon la revendication 3, **caractérisé en ce que** l'image de l'émission radio parasite (5, 12, 19) est comparée avec les images prises pendant la phase d'apprentissage afin de vérifier s'il existe des caractéristiques identiques.

5. Procédé selon la revendication 4, **caractérisé en ce que** la comparaison de l'image prise pendant la phase d'apprentissage et l'image de l'émission radio parasite (5, 12, 19) est effectuée à l'aide de méthodes de reconnaissance de formes et/ou de reconnaissance d'images.

6. Procédé selon l'une des revendications 3 à 5, **caractérisé en ce que** des techniques de logique floue sont utilisées en tant que méthodes de reconnaissance de formes et/ou de reconnaissance d'images.

7. Procédé selon l'une des revendications 3 à 6, **caractérisé en ce que** l'image prise pendant la phase d'apprentissage, image qui est la plus proche de l'image de l'émission radio parasite (5, 12, 19), ainsi que l'endroit de l'émission radio de référence correspondante qui est connu depuis la phase d'apprentissage et qui sert d'information sur la position spatiale de l'installation (6, 13, 17) d'où sort l'émission radio parasite (5, 12, 19) détectée dans l'environnement, sont utilisés.

8. Procédé selon la revendication 7, **caractérisé en ce que**, en cas de détection de la position de l'installation d'émission (6, 13, 17) d'ou sort une émission radio parasite (5, 12, 19) dans une partie de la zone où des émissions radio ne sont pas désirées, l'unité d'analyse avertit automatiquement les opérateurs.

9. Procédé selon la revendication 7, **caractérisé en ce que**, en cas de détection de la position de l'installation d'émission (6, 13, 17) d'où sort une émission radio parasite (5, 12, 19) dans une partie de la zone où des émissions radio sont autorisées, l'unité d'analyse supprime l'avertissement des opérateurs.

10. Procédé selon l'une des revendications 3 à 9, **caractérisé en ce que** le degré de convergence entre l'image prise pendant la phase d'apprentissage qui est la plus proche, et l'image de l'émission radio parasite (5, 12, 19) est analysé sur la base de différentes caractéristiques.

11. Procédé selon l'une des revendications 3 à 9, **caractérisé en ce que** des informations supplémentaires résultant de l'émission radio parasite (5, 12, 19), en première ligne les temps de propagation du signal, le décalage lors de la commutation du canal etc., sont utilisées en tant qu'informations supplémentaires dans le cadre de l'analyse des signaux du récepteur radio (2) dans l'unité d'analyse.

12. Procédé selon l'une quelconque des revendications précédentes, **caractérisé en ce que** les signaux de plus qu'un récepteur radio (2) sont analysés et traités dans l'unité d'analyse afin d'établir une image commune de l'émission radio (5, 12, 19).

13. Procédé selon l'une quelconque des revendications précédentes, **caractérisé en ce** qui concerne les téléphones mobiles répandus, appelés portables, les émissions radio (5, 12, 19) de tels téléphones mobiles en mode dit mode de veille sont également utilisés à des fins d'analyse des images pour déterminer la position du téléphone mobile.

14. Procédé selon la revendication 13, **caractérisé en ce que** les émissions radio (5, 12, 19) qui naissent lors de l'activation / la désactivation cadencée des récepteurs des téléphones mobiles, sont utilisées pour déterminer la position de tels téléphones mobiles en mode dit mode de veille.

15. Procédé selon l'une quelconque des revendications précédentes, **caractérisé en ce que** le procédé sert également à déterminer la position d'émissions radio non-spécifiques d'appareils électrotechniques généraux, notamment d'ordinateurs portables, de lecteurs CD etc., qui émettent des champs perturbateurs de haute fréquence.

16. Procédé selon l'une quelconque des revendications précédentes, **caractérisé en ce qu'**il est procédé à un traitement spécial des signaux de mesure du récepteur radio (2) qui assure une analyse séparée des signaux si de multiples émissions radio simultanées (5, 12, 19) provenant de différentes installations d'émission non-désirées (6, 13, 17), sont détectées.

17. Procédé selon l'une quelconque des revendications précédentes, **caractérisé en ce que** le récepteur radio (2) (au moins un) et/ou l'installation d'émission de référence est déplacé(e) sur une trajectoire connue à l'égard de son/sa position pendant la phase d'apprentissage et que le récepteur radio (2) enregistre en même temps des émissions radio de référence sur des points connues de cette trajectoire.

18. Procédé selon l'une quelconque des revendications précédentes, **caractérisé en ce que** la phase d'apprentissage est effectuée une seule fois ou dans des intervalles plus importants et que les images d'émissions radio typiques (5, 12, 19) qui sont créées dans ce cadre, sont sauvegardées.

19. Procédé selon la revendication 18, **caractérisé en ce que** la phase d'apprentissage est effectuée toujours lorsque les conditions dans l'environnement du récepteur radio (2) ont changé de manière significative et de préférence en fonction des saisons.

20. Procédé selon l'une quelconque des revendications précédentes dans le cadre duquel au moins un récepteur radio (2) avec une installation de réception dont les caractéristiques de réception peuvent être influencées, est utilisé et qui est
**caractérisé en ce que**
l'installation de réception est équipée d'une antenne directive.

21. Procédé selon la revendication 20, **caractérisé en ce que** l'effet directif et/ou la résolution du récepteur radio (2) est/sont influencé(e)s.

22. Procédé selon l'une des revendications 20 ou 21, **caractérisé en ce que** l'effet directif de l'installation de réception est réglé par au moins une partie de la sphère totale qui entoure l'installation de réception.

23. Procédé selon l'une des revendications 20 à 22, **caractérisé en ce que** l'effet directif de l'installation de réception est modifié mécaniquement ou électroniquement.

24. Procédé selon l'une des revendications 20 à 23, **caractérisé en ce que** l'effet directif de l'installation de réception est modifié par le pivotement des lobes de réception ou des minima de réception, respectivement par une technique de radiogoniométrie.

25. Procédé selon l'une des revendications 20 à 24, **caractérisé en ce que**, au niveau de la technique des signaux, le récepteur radio (2) est raccordé à une unité d'analyse à laquelle il transmet les signaux correspondant aux émissions radio parasites captées (9, 12, 19).

26. Procédé selon la revendication 25, **caractérisé en ce que**, en cas d'utilisation de plusieurs récepteurs radio (2), tous les signaux correspondant aux émissions radio parasites captées (9, 12, 19), sont transmis à une unité d'analyse commune.

27. Procédé selon l'une des revendications 25 ou 26, **caractérisé en ce que** l'unité d'analyse se sert d'un ordinateur standard etc.
